# EUROPEAN PATENT APPLICATION

(11) **EP 2 088 513 A1**
(43) Date of publication of application: **12.08.2009**
(21) Application number: 07832543.8
(22) Date of filing: 27.11.2007
(51) Int. Cl.: G06F 13/00, G06F 12/00, G06T 1/00, H04N 1/21

(54) **IMAGE SHARING SERVER, SYSTEM, METHOD, AND PROGRAM**

(30) Priority: 30.11.2006 JP 2006324645
(71) Applicant: FUJIFILM Corporation, Minato-ku Tokyo 106-8620 (JP)
(72) Inventor: KASHIMA, Hideki, Minato-ku Tokyo 106-8620 (JP)
(74) Representative: Höhfeld, Jochen
(86) International application number: PCT/JP2007/072818
(87) International publication number: WO 2008/066021

(57) **Abstract**

The present invention provides a mechanism for efficiently using the resources of a server for an image sharing service. According to an aspect, an image information management server includes an image information storage device for storing original image storage information for identifying an original image (original image data) stored in each terminal. The original image itself is accumulated in respective terminals instead of a server and the image is distributed and shared between the terminals via the server.

## Description

### Technical Field

The present invention relates to a technique for managing image sharing.

### Background Art

Conventionally, there have been many services by which a server manages images of a terminal user to share the images with other users. In this case, the server requires a massive amount of resources. Patent Document 1 discloses that image data are distributed and stored in the terminals of users other than a terminal of a user who provides the image data.
Patent Document 1: Japanese Patent Application Laid-Open No. 2003-167772

### Disclosure of the Invention

### Problems to be Solved by the Invention

In Patent Document 1, image data transmitted from the terminal of a storage requester is backed up and stored in the terminal of a storage location provider (see paragraphs 0029 and 0037), which is based on the premise that the image data is stored in a server, therefore, measures for solving a massive amount of resource consumption in the server have not been proposed.

Further, in Patent Document 1, the storage location provider may be allowed to use an image whose storage was requested by someone else (see paragraph 0044), but cannot share an image with someone from whom storage was not requested, making it difficult to say that image sharing is achieved with an arbitrary user.

Moreover, Patent Document 1 can only handle cases in which terminals are always connected (see paragraph 0034), and it is unclear how the storage requester acquires images having a high pixel count from the storage location provider when a terminal connects at arbitrary timing.

An object of the present invention is to provide a mechanism for efficiently using the resources of a server for an image sharing service.

### Means for Solving the Problems

An image sharing server according to the present invention includes: a terminal registration section for registering identification information of terminals including an original image storage terminal which stores an original image and an original image request terminal which makes a request for acquisition of the original image; a login management section for managing the login and logoff of the original image storage terminal and the original image request terminal in accordance with the identification information of the terminals registered with the terminal registration section; a receiving section for receiving from the original image storage terminal whose login is authorized by the login management section, storage location information of the original image in the original image storage terminal, and a reduced image of the original image; an image information storage section for storing the storage location information of the original image received by the receiving section and the reduced image of the original image in association with the identification information of the original image storage terminal; a reduced image transmission section for transmitting the reduced image stored in the image information storage section to the original image request terminal in response to a request from the original image request terminal whose login is authorized by the login management section; an original image transmission request section for, in response to the request from the original image request terminal, making a request for transmission of an original image by transmitting storage location information of the original image corresponding to a desired reduced image among reduced images stored in the image information storage section to the original image storage terminal whose login is authorized by the login management section in accordance with identification information corresponding to the desired reduced image; an original image receiving section for receiving the original image from the original image storage terminal to which the original image transmission request section made a request for the transmission of the original image; and an original image transmission section for transmitting the original image received by the original image receiving section from the original image storage terminal to the original image request terminal which has made the request for the transmission of the original image.

According to the invention, the storage location information of the original image in the original image storage terminal and the reduced image of the original image, which are received from the registered original image storage terminal, are stored in association with the identification information of the original image storage terminal. To the original image request terminal, the reduced image for reference (or the storage location information of the reduced image in the image sharing server) is transmitted, without the storage location information of the original image being transmitted.

When a request for the transmission of the original image corresponding to a desired reduced image is made by the original image request terminal, to the original image storage terminal having the identification information corresponding to the desired reduced image, the storage location information of the original image corresponding to the desired reduced image is presented, and the request for the transmission of the original image is made.

When the original image is received from the original image storage terminal, the original image is transmitted to the original image request terminal.

In this manner, the image sharing server according to the present invention stores reduced images, storage location information, and the identification information of the original image storage terminal, without storing original images themselves, and, when necessary, acquires an original image from the original image storage terminal and transmits the original image to the original image storage terminal, and thus the occurrence of a resource problem due to storage of a large amount of original images can be prevented, and the image sharing system can be efficiently operated.

Moreover, the storage location information of the original image is not transmitted to the original image request terminal, thus any security problem does not occur.

When an original image transmission request is received from the original image request terminal, and when the login management section identifies the logoff of the original image storage terminal, the original image transmission request section may wait to make a request to the original image storage terminal for the transmission of the original image until the login management section authorizes the login of the original image storage terminal.

In this way, even if the original image storage terminal is logged off, the original image transmission request is temporarily accepted, allowing the request for and reception of the original image to be accepted when the original image storage terminal is logged in.

When the original image is received from the original image storage terminal, and when the login management section identifies the logoff of the original image request terminal, the original image transmission section may wait to transmit the original image to the original image request terminal until the login management section authorizes the login of the original image request terminal.

In this way, even if the original image request terminal is logged off, the original image is temporarily accepted from the original image storage terminal, allowing the original image to be transmitted when the original image request terminal is logged in.

An image sharing system according to the present invention includes an original image storage terminal which stores an original image, an original image request terminal which makes a request for the acquisition of the original image, and the image sharing server mentioned above.

An image sharing method according to the present invention includes steps of: registering identification information of terminals including an original image storage terminal which stores an original image and an original image request terminal which makes a request for acquisition of the original image; managing login and logoff of the original image storage terminal and the original image request terminal in accordance with the identification information of the registered terminals; receiving from the original image storage terminal authorized to log in, storage location information of the original image in the original image storage terminal, and a reduced image of the original image; storing the storage location information of the received original image and the reduced image of the original image in association with the identification information of the original image storage terminal; transmitting the stored reduced image to the original image request terminal in response to a request from the original image request terminal authorized to log in; in response to the request from the original image request terminal, making a request for transmission of an original image by transmitting storage location information of the original image corresponding to a desired reduced image among stored reduced images to the original image storage terminal authorized to log in, in accordance with identification information corresponding to the desired reduced image; receiving the original image from the original image storage terminal to which a request for the transmission of the original image is made; and transmitting the original image received from the original image storage terminal to the original image request terminal which has made the request for the transmission of the original image.

A Program causing a computer to execute the above image sharing method is also included in the present invention.

### Advantages of the Invention

According to the present invention, a server stores reduced images, storage location information, and identification information of an original image storage terminal, without storing original images themselves, and, when necessary, the server acquires an original image from the original image storage terminal and transmits it to the original image storage terminal. Thus, a resource problem due to storage of a large amount of original images can be prevented, and the image sharing system can be efficiently operated.

### Brief Description of the Drawings

Figure 1 is a schematic configuration diagram of an image sharing system;
Figure 2 is a block diagram of an image information management server and a user terminal;
Figure 3 is a flowchart illustrating a flow of user registration processing;
Figure 4 is a flowchart illustrating a flow of image information registration processing;
Figure 5 is a flowchart illustrating a flow of original image acquisition processing (while the original image storage terminal is logged in);
Figure 6 is a flowchart illustrating a flow of original image acquisition processing (while the original image storage terminal is logged off);
Figure 7 is a diagram illustrating the storage condition of an original image storage information file; and
Figure 8 is a diagram illustrating the storage condition of the reduced image information, the original image storage information file and the ID.

### Description of Symbols

- 100: image information management server
- 102: HDD
- 106: user information storage device
- 107: login management device
- 8: image information storage device
- 109: image information transmission device
- 110: original image acquisition device
- 200: user terminal
- 202: HDD
- 206: user registration device
- 207: login notification device
- 208: image information registration device
- 209: logoff device 209
- 211: image information acquisition device
- 212: original image acquisition device

### Best Mode for Carrying out the Invention

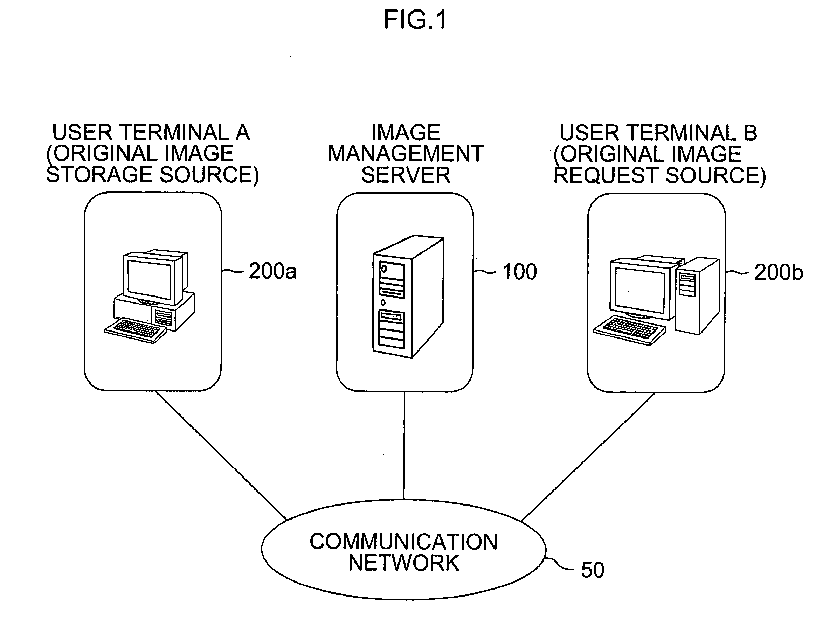

Figure 1 is a schematic configuration diagram of an image sharing system according to a preferred embodiment of the present invention. This system includes an image information management server 100 and a plurality of user terminals 200 which are connected to the image information management server 100 through a network 50 such as the Internet.

The user terminal (hereinafter referred to as "terminal") 200 is constituted by a personal computer, digital camera, mobile phone, PDA or the like.

The image information management server 100 (hereinafter referred to as "server") includes an image information storage device 108 for storing original image storage information for identifying an original image (original image data) stored in each terminal 200. The original image itself is accumulated in respective terminals 200 instead of the server 100 and the image is distributed and shared between the terminals 200 via the server 100.

For convenience of description, in this system, when a terminal 200b makes a request to the server 100 for transmission of a desired original image, the server 100 searches for a terminal 200a, which is a storage source of the requested original image, acquires the requested original image from the terminal 200a, and transfers the image to the terminal 200b, which is the request source of the image. Upon receiving the desired image from the server 100, the terminal 200b, which is the request source of the image, displays, processes and/or stores the image suitably to use them for browsing and print ordering. Since the terminals 200a and 200b have the same configuration, the terminal 200b may be the storage source of original images and the terminal 200a may be the request source of images.

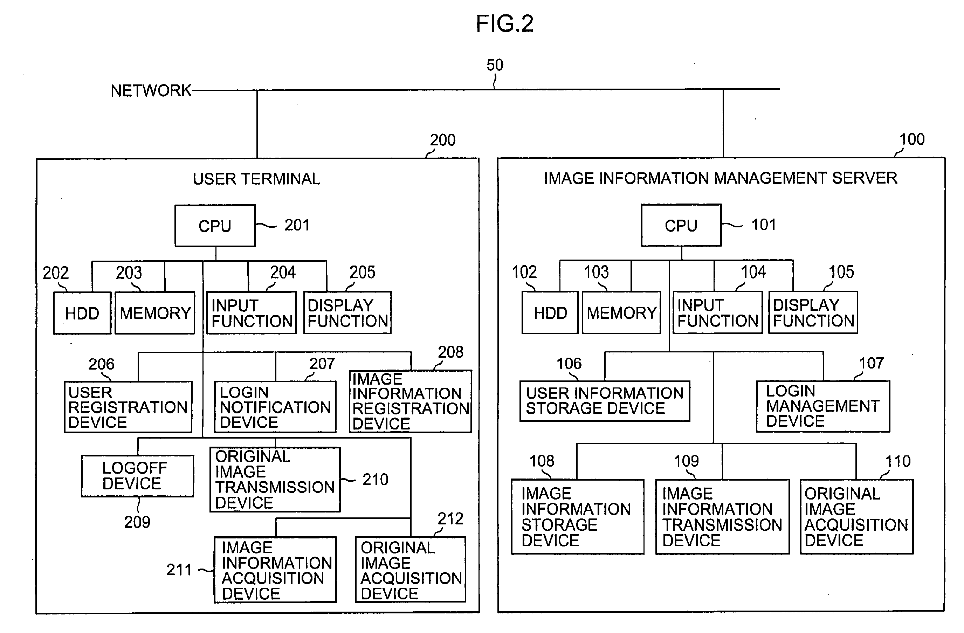

Figure 2 illustrates the detailed configuration of the server 100 and terminal 200.

The server 100 includes a CPU 101, an HDD 102, a memory 103, an input function 104, a display function 105, a user information storage device 106, a login management device 107, an image information storage device 108, an image information transmission device 109 and an original image acquisition device 110.

The CPU 101 executes programs stored in the HDD 102 to control the operation of each block as a whole.

The HDD 102 is a mass storage medium for accumulating data required for programs and processing for causing the CPU 101 to operate, or reduced images received from the terminal 200a. The memory 103 temporarily stores data required for the operation of the CPU 101.

The input function 104 is a device having a function for receiving instructions inputted by a user, such as an input key, touch panel, mouse, and speech recognition.

The display function 105 includes a display device such as a display, and displays desired images and characters in accordance with the instruction from the CPU 101.

The user information storage device 106 is a device for storing user information including identification information (e.g., ID and password) required to log in to the server 100.

The login management device 107 authorizes login to the server 100 in accordance with the user information stored in the user information storage device 106, and exercises various controls when ending a login (logged off).

The image information storage device 108 associates original image storage information identifying the storage location (path) of an original image in the terminal 200a, reduced image information identifying the storage location (path) of a reduced image of the original image in the HDD 102, and identification information of the terminal 200a and stores them.

The image information transmission device 109 is a device for transmitting the original image storage information identifying the original image requested by the image request terminal 200b to the image storage terminal 200a.

The terminal 200 includes a CPU 201, an HDD 202, a memory 203, an input function 204, a display function 205, a user registration device 206, a login notification device 207, an image information registration device 208, a logoff device 209, an original image transmission device 210, an image information acquisition device 211 and an original image acquisition device 212.

The CPU 201, HDD 202, memory 203, input function 204 and display function 205 have the same function as the CPU 101, HDD 102, memory 103, input function 104 and display function 105, respectively.

The user registration device 206 performs processing for user registration with the server 100.

The login notification device 207 performs processing for requesting the server 100 for a login based on the user information registered by the user registration device 206.

The image information registration device 208 performs processing for registering with the server 100 the original image storage information identifying the original image stored in the HDD 202.

The logoff device 209 performs processing for requesting the server 100 for a logoff.

The original image transmission device 210 performs processing for searching the HDD 202 for the original image requested by the server 100, based on the original image storage information and sending the original image.

The image information acquisition device 211 performs processing for acquiring the reduced image information from the server 100.

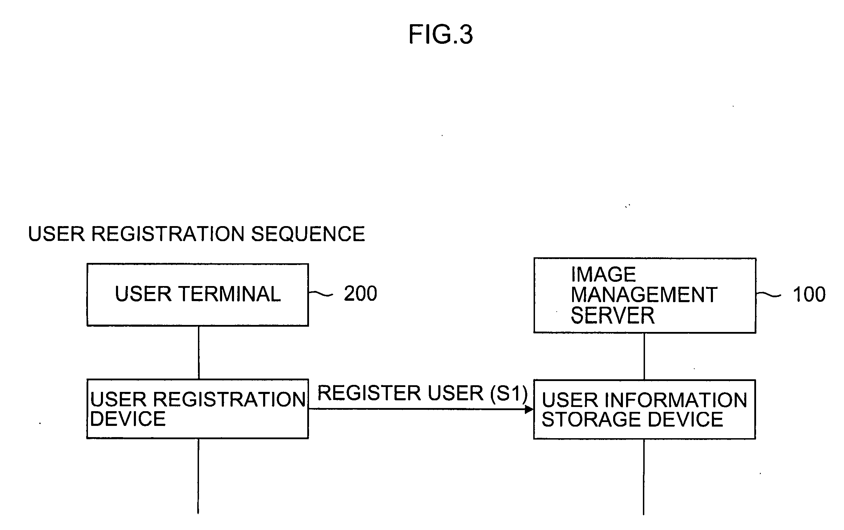

The flow of processing performed in the system will now be described with reference to flowcharts in Figures 3 to 6.

Figure 3 illustrates the flow of user registration processing. This processing is performed on both the terminals 200a and 200b.

In S1, the user registration device 206 of the terminal 200 presents to the server 100 user information such as a user name and password, which are arbitrarily entered, and applies user registration.

When receiving the application of the user registration from the terminal 200, the server 100 issues an individual identification (ID) for each user, and transmits the ID to the terminal 200. The server 100 also creates an individual folder for each user, stores received user information and issued ID in each folder, and registers the users. This allows the terminal 200 to log in to the server 100 based on issued ID and registered user information, and to acquire an original image by original image acquisition processing, which will be described later.

The ID may be issued individually for each user, or may be information identifying members belonging to a specific group, and, at the time of registration. A user may select the issuance of an ID as a member belonging to a specific group.

For example, when a user of the terminal 200a and a user of the terminal 200b know each other, and want to exchange original images with each other, both users may select the issuance of an ID as a member of a common group. In this case, the identification information of the common group may be embedded in a portion of the issued ID.

The login management device 107 manages the paths of folders storing user information, thus a path in which user information is stored can be recognized.

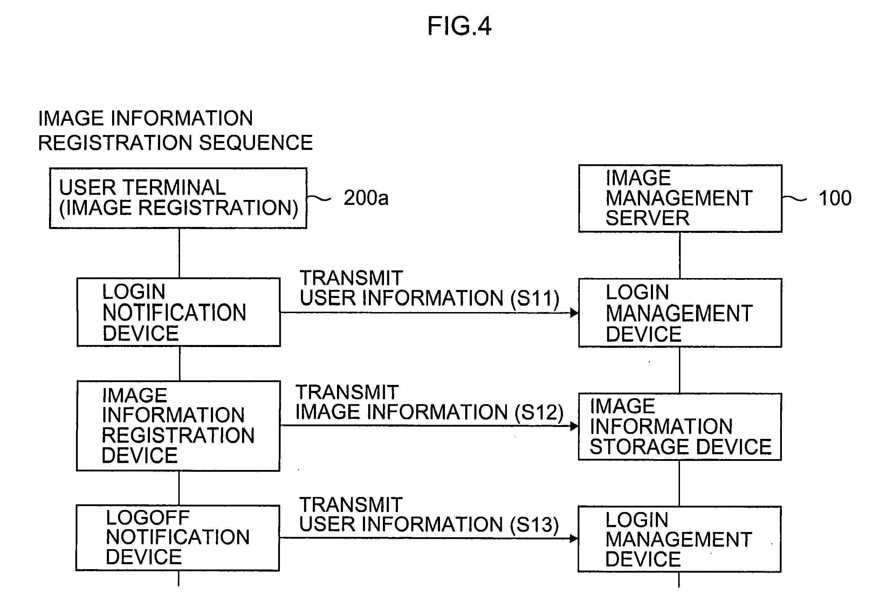

Figure 4 illustrates the flow of image information registration processing.

In S11, the login notification device 207 of the user terminal 200a transmits user information and ID registered with the server 100 by the user registration device 206, and the address on the network 50 of the user terminal 200a to the server 100 through the network 50, and makes a request for the login.

The login management device 107 of the server checks the user information and ID received from the terminal 200a against user information and ID in the user information storage device 106, and, in response to the matching of them, authorizes the login. The login management device 107 stores the user information, ID and network address authorized to log in, and manages them until the logoff.

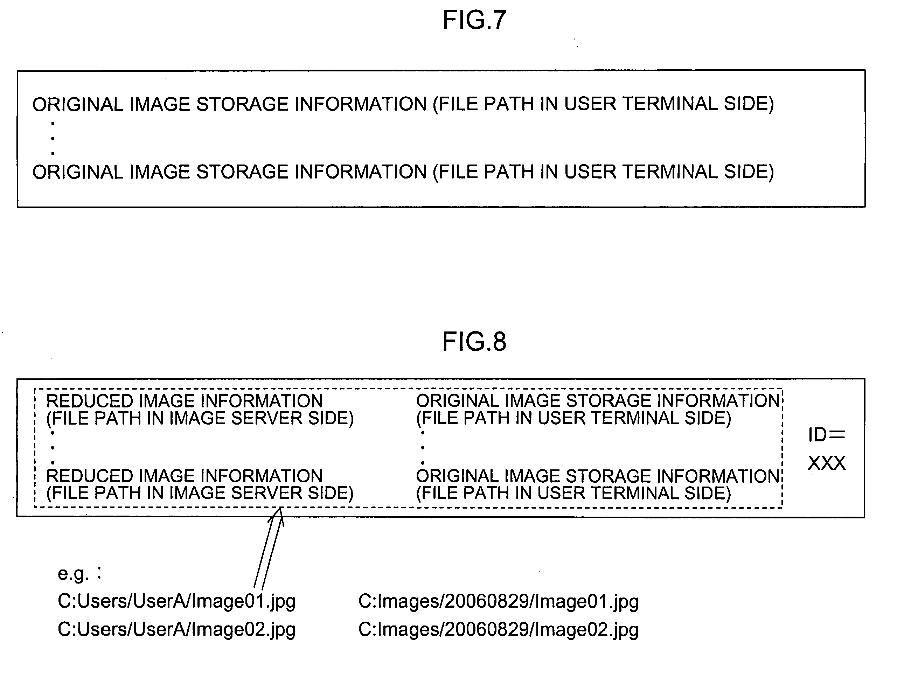

In S 12, the image information registration device 208 of the user terminal 200a authorized to log in selects an original image in the HDD 202, in accordance with an original image selection instruction arbitrarily entered from the input function 204. The image information registration device 208 creates original image storage information file which describes storage location information in the HDD 202 of the selected original image and a reduced image of the selected original image. Figure 7 is a conceptual explanatory diagram of the original image storage information file created for each selected original image.

The user terminal 200a creates the reduced image having the size suitable for browsing like QVGA, based on the selected original image. A thumbnail, which is prepared in advance along with an original image, like Exif files, may be transmitted as a reduced image; in this case, reducing at the best size taking into consideration both ease of browsing and resource consumption on the server 100 is better.

The image information registration device 208 transmits the created original image storage information file and the reduced image to the server 100 through the network 50 in accordance with a transmission instruction arbitrarily entered from the input function 204.

The image information storage device 108 of the server 100 stores in the HDD 102, the reduced image received from the terminal 200a through the network 50. At the same time, the image information storage device 108 associates the received original image storage information file, the reduced image information, which is the storage location information (path) in the HDD 102 of the reduced image, and the ID of the terminal 200a with one another, and stores them. The image information storage device 108 may create a folder specific to the ID of the user terminal 200a, and store the original image storage information file and reduced image information in the folder.

Figure 8 illustrates an example of association between the reduced image information, the original image storage information file, and the ID, which are stored in the image information storage device 108.

Sets of reduced image information and original image storage information files may be sorted and stored. For example, sorting may be performed in order of decreasing number of original image requests from the terminal 200b, in order of storage date and time of original images, in order of decreasing number of search key word hits, and in order of decreasing number of times the reduced images have been displayed. In this way, searches are performed from popular original images in priority, accelerating searching.

Further, sets of reduced image information and original image storage information files may be classified and stored in folders created by category. In this way, an intended category can be specified to search for an original image, increasing efficiency.

The server 100 may search a specific folder based on the ID transmitted from the terminal 200a, and change, update, add or remove the contents of the reduced image information and the original image storage information stored therein as appropriate. If an original image is removed from the user terminal 200a, its corresponding reduced image information and original image storage information file may be removed along with the original image. Alternatively, reduced image information may be left and stored in association with the information with a flag or marker indicating that the original image has been removed, so as to allow browsing of reduced images only.

In S13, the logoff device 209 of the terminal 200a transmits a login ID to the server 100 and makes a request for the logoff. The login management device 107 of the server 100 responses to the logoff request from the terminal 200a, and removes the same ID as the received login ID from a storage region to perform the logoff of the terminal 200a.

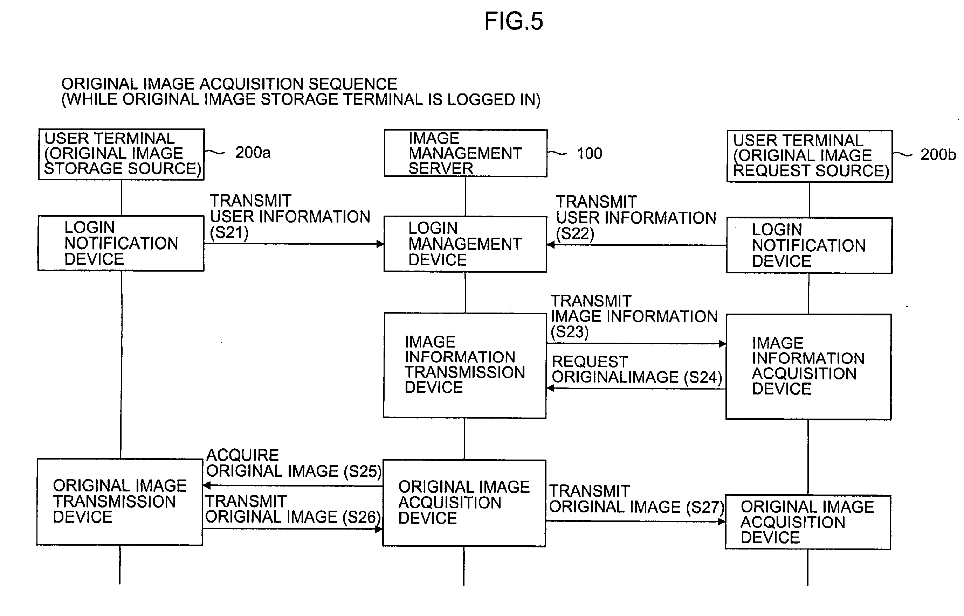

Figure 5 is a flowchart illustrating the flow of original image acquisition processing (while the original image storage terminal is logged in). This processing is performed when the terminal 200a, which is the original image storage terminal, is logged in to the server 100.

In S21 and S22, the login notification device 207 of the terminals 200a and 200b each transmit their IDs and passwords to the server 100, and make a request for the login. The login management device 107 of the server 100 authorizes the login of the terminals 200a and 200b if the user information received from the terminals 200a and 200b through the network 50 is authentic. The login management device 107 stores and manages the login IDs and network addresses of the terminals 200a and 200b until their logoff.

In S23, in response to the request from the image information acquisition device 211 of the terminal 200b, the image information transmission device 109 of the server 100 searches the image information storage device 108 for the reduced image information. When the terminal 200b requests to search for a desired reduced image information, a record category or the like of the reduced image arbitrarily specified by the input function 204 may be used as a key. When the reduced image information is retrieved, the HDD 102 is searched for the reduced image specified by the reduced image information.

If the ID corresponding to the retrieved reduced image information has been stored in the login management device 107, the image information transmission device 109 of the server 100 transmits an "immediate acquisition possible" notification, which is information indicating that the original image can be acquired immediately from the terminal 200a, which is logged in, to the terminal 200b along with the retrieved reduced image. If the login ID of the searched terminal 200a has not been stored in the login management device 107, the image information transmission device 109 transmits an "immediate acquisition impossible" notification, which is information indicating that the original image cannot be acquired immediately from the terminal 200a, which is logged in, to the terminal 200b along with the searched reduced image. Not only the searched reduced image, but also the retrieved reduced image information may be transmitted to the terminal 200b.

In the terminal 200b, the "immediate acquisition possible" notification or "immediate acquisition impossible" notification from the server 100 is displayed by the display function 205 along with the reduced image, and whether or not the original image corresponding to the retrieved reduced image can be immediately acquired can be recognized.

In this original image acquisition processing (while the original image storage terminal is logged in), it is assumed that the login ID of the terminal 200a, which is the storage source of the original image, has been stored in the login management device 107, and the "immediate acquisition possible" notification is sent. The processing performed when the login ID of the terminal 200a, which is the storage source of the original image, has not been stored in the login management device 107 will be described in connection with after-mentioned original image acquisition processing (while the original image storage terminal is logged off).

In S24, the reduced image corresponding to a desired original image is specified through the input function 204, and the image information acquisition device 211 of the terminal 200b accepts the specification of the desired original image to be used for printing or the like. The image information acquisition device 211 transmits the reduced image information identifying the specified reduced image to the server 100 to make a request for the transmission of the original image corresponding to the reduced image.

In S25, the original image acquisition device 110 of the server 100 identifies, from the image information storage device 108, the ID and original image storage information file corresponding to the reduced image information received from the terminal 200b, and transmits the identified original image storage information file to the terminal 200a having the identified ID to make a request to the terminal 200a for the transmission of the original image.

In S26, the original image transmission device 210 of the terminal 200a receives the original image storage information file transmitted by the original image acquisition device 110 of the server 100 through the network 50.

The original image transmission device 210 searches the HDD 202 for the original image, based on the received original image storage information file. The original image transmission device 210 transmits the original image retrieved from the HDD 202 to the server 100.

In S27, upon receiving the original image from the terminal 200a, the original image acquisition device 110 of the server 100 transfers the original image to the terminal 200b. The original image acquisition device 212 of the terminal 200b receives the original image from the server 100. The original image acquisition device 212 stores the received original image. The original image may be used for various purposes, such as processing, browsing and printing.

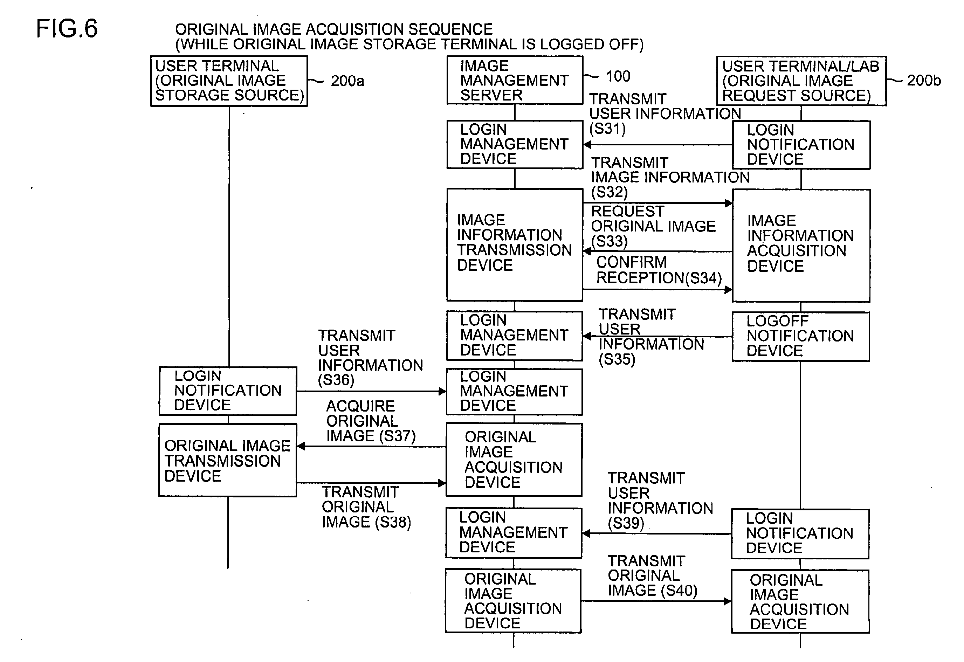

Figure 6 is a flowchart illustrating the flow of original image acquisition processing (while the original image storage terminal is logged off). This processing can be handled also when the terminals 200a and 200b, which make a request for the transmission of and receive the original image, are not logged in to the server 100.

In S31, the login notification device 207 of the terminal 200b transmits the ID, password and the like to the server 100, and makes a request for the login. The login management device 107 of the server 100 authorizes the login of the terminal 200b if the ID and password received from the terminal 200b through the network 50 are authentic. The login management device 107 stores and manages the login ID and network address until the terminal 200b logs off.

In S32, in response to the request from the terminal 200b, the image information transmission device 109 of the server 100 searches the image information storage device 108 for the reduced image information and reduced image. When the terminal 200b requests to search for a desired reduced image, the record category or the like of the reduced image arbitrarily specified by the input function 204 may be used as a key.

If the ID corresponding to the retrieved reduced image information has been stored in the login management device 107 as the ID of the terminal 200a, the image information transmission device 109 of the server 100 transmits an "immediate acquisition possible" notification, which is information indicating that the original image can be acquired immediately from the terminal 200a, which is logged in, to the terminal 200b along with the retrieved reduced image. If the login ID of the terminal 200a has not been stored in the login management device 107, the image information transmission device 109 transmits an "immediate acquisition impossible" notification, which is information indicating that the original image cannot be acquired immediately from the terminal 200a, which is logged in, to the terminal 200b along with the retrieved reduced image.

In this original image acquisition processing (while the original image storage terminal is logged off), it is assumed that the login ID of the terminal 200a, which is the storage source of the original image, has not been stored in the login management device 107. The processing performed when the login ID of the terminal 200a, which is the storage source of the original image, has been stored in the login management device 107 can be handled with the aforementioned original image acquisition processing (while the original image storage terminal is logged in).

In S33, by making the user specify the reduced image corresponding to a desired original image through the input function 204, the image information acquisition device 211 of the terminal 200b receives the specification of the desired original image used for printing or the like. The image information acquisition device 211 transmits the reduced image information identifying the specified reduced image to the server 100 to make a request for the transmission of the original image.

In S34, upon receiving the reduced image information from the terminal 200b, the image information transmission device 109 of the server 100 associates the login ID of the terminal 200b, which is the transmission source of the reduced image information, with the original image storage information file and ID corresponding to the reduced image information, and then stored as original image acceptance information. Then, the image information transmission device 109 transmits to the terminal 200b a notification confirming that the original image transmission request from the terminal 200b has been accepted. This is because, in contrast to processing in Figure 5, the terminal 200a, which is the image storage terminal, is not logged in to the server 100 at the time of the original image transmission request, and thus a request for the acquisition of the original image cannot be transmitted immediately to the terminal 200a.

In S35, the logoff device 209 of the terminal 200b makes a request to the server 100 for the logoff. In response to the logoff request from the terminal 200b, the login management device 107 of the server 100 does so.

In S36, the login notification device 207 of the terminal 200a transmits the ID, password and the like to the server 100, and makes a request for the login. The login management device 107 of the server 100 authorizes the login of the terminal 200a if the ID and password received from the terminal 200a through the network 50 are authentic. The login management device 107 stores and manages the login ID and network address until the terminal 200a logs off.

In S37, the original image acquisition device 110 of the server 100 compares the login ID stored in the login management device 107 with the ID of the original image acceptance information, and if they match, determines that the terminal 200a has logged in, which has stored the original image requested by the terminal 200b. If the login of the terminal 200a, which has stored the requested original image, has been determined, the original image acquisition device 110 transmits the original image storage information file of the original image acceptance information to the terminal 200a to make a request for the transmission of the original image identified by the file.

In S38, the image information acquisition device 211 of the terminal 200a receives the original image storage information file transmitted by the original image acquisition device 110 of the server 100 through the network 50.

The original image transmission device 210 searches the HDD 202 for the original image, based on the received original image storage information file. The original image transmission device 210 transmits the original image retrieved from the HDD 202 to the server 100.

The original image acquisition device 110 of the server 100 associates and stores the original image received from the terminal 200a with the ID of the terminal 200b, which is the request source of the original image and stores it.

In S39, the login notification device 207 of the terminal 200b transmits the ID, password and the like to the server 100, and makes a request for the login. The login management device 107 of the server 100 authorizes the login of the terminal 200b if the ID and password received from the terminal 200b through the network 50 are authentic. The login management device 107 stores and manages the login ID and network address until the terminal 200b logs off.

The original image acquisition device 110 of the server 100 compares the ID of the request source of the original image contained in the original image acceptance information with the login ID of the terminal 200b stored in the login management device 107, and, if they match, determines that the terminal 200b, which is the request source of the original image, has logged in.

In S40, if it is determined that the terminal 200b, which is the request source of the original image, has been logged in, the original image acquisition device 110 transfers to the terminal 200b the original image which is stored in association with the ID of the terminal 200b. The original image acquisition device 212 of the terminal 200b receives the original image from the server 100.

If it is determined that the terminal 200b, which is the request source of the original image, has not been logged in, the original image acquisition device 110 continues to store the original image associated with the ID of the terminal 200b, and waits to transmit it.

In this manner, whenever a request for the transmission of an original image is received from the terminal 200b, the server 100 acquires the desired original image from the terminal 200a and provides it to the terminal 200b. The server 100 stores reduced image information, original image storage information files, and IDs, without storing original images, therefore, the resource of the server 100 for storage of original images can be saved, and the resource of the terminal 200 can be efficiently used.

In addition, even if the storage source of the original image is not logged in to the server at the time when the original image is requested, the original image is requested at the time of login to the server, therefore, the request for the original image is not wasted.

Further, even if the request source of the original image is not logged in to the server when the original image is acquired, the acquired original image is temporarily stored, and when the request source of the original image logs in, the original image is transmitted, therefore, the transmission of the original image from the storage source of the original image is not wasted.

## Claims

1. An image sharing server, comprising:
a terminal registration section for registering identification information of terminals including an original image storage terminal which stores an original image and an original image request terminal which makes a request for acquisition of the original image;
a login management section for managing the login and logoff of the original image storage terminal and the original image request terminal in accordance with the identification information of the terminals registered with the terminal registration section;
a receiving section for receiving from the original image storage terminal whose login is authorized by the login management section, storage location information of the original image in the original image storage terminal, and a reduced image of the original image;
an image information storage section for storing the storage location information of the original image received by the receiving section and the reduced image of the original image in association with the identification information of the original image storage terminal;
a reduced image transmission section for transmitting the reduced image stored in the image information storage section to the original image request terminal in response to a request from the original image request terminal whose login is authorized by the login management section;
an original image transmission request section for, in response to the request from the original image request terminal, making a request for transmission of an original image by transmitting storage location information of the original image corresponding to a desired reduced image among reduced images stored in the image information storage section to the original image storage terminal whose login is authorized by the login management section in accordance with identification information corresponding to the desired reduced image;
an original image receiving section for receiving the original image from the original image storage terminal to which the original image transmission request section made a request for the transmission of the original image; and
an original image transmission section for transmitting the original image received by the original image receiving section from the original image storage terminal to the original image request terminal which has made the request for the transmission of the original image.

2. The image sharing server according to claim 1, wherein when an original image transmission request is received from the original image request terminal, and when the login management section identifies logoff of the original image storage terminal, the original image transmission request section waits to make a request for the transmission of the original image to the original image storage terminal until the login management section authorizes the login of the original image storage terminal.

3. The image sharing server according to claim 1 or 2, wherein when the original image is received from the original image storage terminal, and when the login management section identifies the logoff of the original image request terminal, the original image transmission section waits to transmit the original image to the original image request terminal until the login management section authorizes the login of the original image request terminal.

4. An image sharing system, comprising:
an original image storage terminal which stores an original image;
an original image request terminal which makes a request for the acquisition of the original image; and
the image sharing server according to any of claims 1 to 3.

5. An image sharing method, comprising the steps of:
registering identification information of terminals including an original image storage terminal which stores an original image and an original image request terminal which makes a request for acquisition of the original image;
managing login and logoff of the original image storage terminal and the original image request terminal in accordance with the identification information of the registered terminals;
receiving from the original image storage terminal authorized to log in, storage location information of the original image in the original image storage terminal, and a reduced image of the original image;
storing the storage location information of the received original image and the reduced image of the original image in association with the identification information of the original image storage terminal;
transmitting the stored reduced image to the original image request terminal in response to a request from the original image request terminal authorized to log in;
in response to the request from the original image request terminal, making a request for transmission of an original image by transmitting storage location information of the original image corresponding to a desired reduced image among stored reduced images to the original image storage terminal authorized to log in, in accordance with identification information corresponding to the desired reduced image;
receiving the original image from the original image storage terminal to which a request for the transmission of the original image is made; and
transmitting the original image received from the original image storage terminal to the original image request terminal which has made the request for the transmission of the original image.

6. A program for causing a computer to execute the image sharing method according to claim 5.
